# FASCICULE DE BREVET EUROPEEN

(11) **EP 4 476 134 B1**
(45) Date de publication et mention de la délivrance du brevet: **06.05.2026**
(21) Numéro de dépôt: 23703590.2
(22) Date de dépôt: 09.02.2023
(51) Int. Cl.: B64C 1/14, B60J 1/10, B32B 17/10

(54) **ENSEMBLE VITRÉ POUR UN AÉRONEF, PROCÉDÉ DE FABRICATION D'UN TEL ENSEMBLE VITRÉ, ET AÉRONEF COMPRENANT UN TEL ENSEMBLE VITRÉ**
GLASANORDNUNG FÜR EIN FLUGZEUG, VERFAHREN ZUR HERSTELLUNG SOLCH EINER GLASANORDNUNG UND FLUGZEUG MIT SOLCH EINER GLASANORDNUNG
GLAZED ASSEMBLY FOR AN AIRCRAFT, METHOD FOR MANUFACTURING SUCH A GLAZED ASSEMBLY AND AIRCRAFT COMPRISING SUCH A GLAZED ASSEMBLY

(30) Priorité: 10.02.2022 FR 2201153
(43) Date de publication de la demande: 18.12.2024
(73) Titulaire: Saint-Gobain Sully, 45600 Sully-sur-Loire (FR)
(72) Inventeur: TONDU, Thomas, 84306 CAVAILLON (FR)
(74) Mandataire: Saint-Gobain Recherche
(86) Numéro de dépôt international: PCT/EP2023/053249
(87) Numéro de publication internationale: WO 2023/152256

(56) Documents cités:
- US-A- 3 009 845
- US-A- 5 270 518
- US-A1- 2013 026 296
- US-A1- 2014 363 254
- US-B1- 8 851 423

## Description

### Technique antérieure

La présente invention appartient au domaine général de la conception de vitrages aéronautiques. Elle concerne plus particulièrement un ensemble vitré pour un aéronef (i.e. destiné à équiper un aéronef). Elle concerne également un procédé de fabrication d'un tel ensemble vitré, ainsi qu'un aéronef équipé de ce dernier. L'invention trouve une application particulièrement avantageuse, bien que nullement limitative, dans la conception de vitrages pour des avions commerciaux.

Les vitrages aéronautiques (vitrages de cockpit, dont vitrages frontales ou « pare-brises » ainsi que vitrages latéraux, mais aussi vitrages cabine couramment nommés hublots) pour aéronefs destinés à être soumis à des différentiels de pressions entre un environnement (une atmosphère) extérieur et l'intérieur dudit aéronef sont des vitrages feuilletés composés d'une pluralité de plis structuraux, plus particulièrement, et de manière traditionnelle, au moins deux plis structuraux. En pratique, encore un autre pli, en sus desdits plis structuraux, peut être utilisé, dont la contribution au comportement mécanique du vitrage n'est pas significative mais qui a pour but d'assurer une continuité aérodynamique ainsi qu'une protection vis-à-vis de certaines conditions affectant l'environnement du vitrage (conditions givrantes, abrasives, grêle, etc.).

Par « pli structural du vitrage », il est classiquement fait référence à une feuille rigide constitutive du vitrage feuilleté et susceptible de constituer à elle seule un vitrage monolithique, d'en assurer la résistance mécanique, en particulier, et ayant un module élastique au moins égal à 1500 MPa par exemple.

Une telle feuille peut éventuellement être complétée, pour former le pli structural, par un talon et une cale agencés sur toute la périphérie de la feuille, au niveau de son chant, ladite cale étant en outre positionnée entre la feuille et le talon ; il est alors fait référence à une configuration de « vitrage par collage structural ».

Une telle feuille rigide peut soit être une feuille de verre minéral, soit une feuille de matériaux polymères, typiquement PMMA (acronyme de « polyméthacrylate de méthyle ») de qualité aéronautique ou PC (acronyme de « polycarbonate »).

Par ailleurs, les plis structuraux sont assemblés entre eux par des couches d'adhésifs intercalaires, par exemple en TPU (acronyme de « polyuréthane thermoplastique »), PVB (acronyme de « polyvinylbutyral »), etc. Il est à noter que de telles couches adhésives intercalaires ne sont pas configurées pour présenter un module élastique minimal tel qu'indiqué précédemment. En conséquence, une couche adhésive intercalaire ne forme pas un pli structural.

La conception générale d'un aéronef peut être réalisée de sorte à faire contribuer significativement les vitrages à la transmission des efforts de pression subis par ledit aéronef. A cet effet, un vitrage aéronautique est « tendu » selon tous ses côtés. On dit encore que le « vitrage travaille en membrane », étant entendu que ce dernier doit permettre de faire circuler les contraintes tangentielles à l'enveloppe (i.e. la peau, ou encore la coque, ou encore la carlingue) de l'aéronef.

Aussi, parmi les exigences fonctionnelles auxquelles doit répondre un vitrage aéronautique, se trouve notamment la résistance à la pression, qui doit être garantie non seulement lorsque le vitrage est intact (cas standard) mais également en cas de casse d'un pli structural du vitrage (cas appelé « fail safe » en anglais). Dit encore autrement, la casse d'un des plis ne doit entraîner ni de perte du vitrage ni de dépressurisation de l'intérieur de l'aéronef, par exemple du cockpit.

Une autre exigence fonctionnelle réside dans la capacité à résister aux impacts d'oiseaux.

Le respect de ces deux exigences dépend de plusieurs facteurs, comme par exemple l'épaisseur des plis structuraux, mais aussi surtout de la configuration du système d'attachement permettant de faire la liaison entre le vitrage aéronautique et la structure de l'aéronef.

Les systèmes d'attachement connus comportent chacun des moyens de retenue dit « externe en contact avec la surface externe (i.e. en regard de l'environnement extérieur) du vitrage, ainsi que des moyens de retenue interne en contact avec la surface interne (i.e. en regard de l'intérieure de l'aéronef) du vitrage. Chacun desdits moyens de retenue externe et interne a pour fonction d'assurer le maintien et la stabilité du vitrage vis-à-vis des efforts de pression que ce dernier subit, mais aussi une étanchéité (eau, air), à tout le moins partielle, de l'intérieur de l'aéronef.

D'une manière générale, lesdits moyens de retenue interne et externe (encore dits « retainers » en anglais) prennent généralement la forme d'un ensemble vis/écrou/rondelle (boulon), éventuellement complété d'un bandeau métallique (par exemple en aluminium de quelques millimètres d'épaisseur), qui peut être relié directement ou bien indirectement à la structure de l'avion.

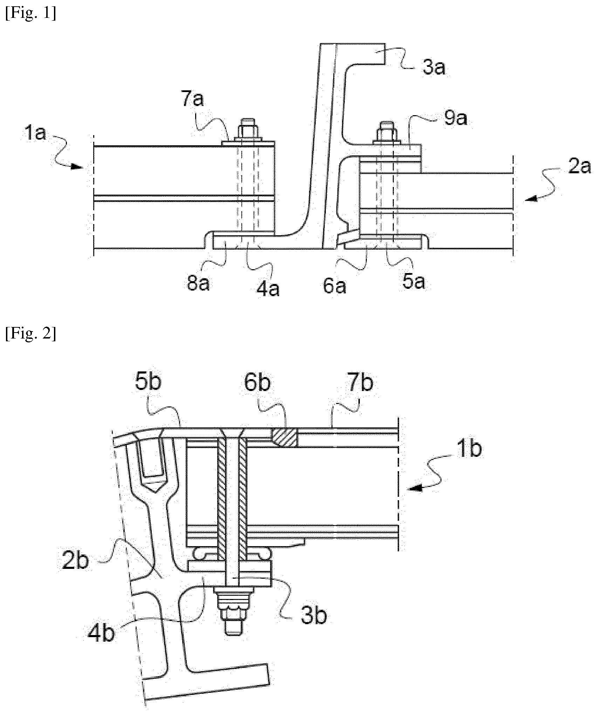

Les figures 1 et 2 illustrent schématiquement deux variantes de systèmes d'attachement selon l'état de la technique.

Dans le cas de la figure 1, un premier vitrage 1a (à gauche sur la figure 1) et un deuxième vitrage 2a (à droite sur la figure 1) sont agencés de part et d'autre d'un élément 3a de structure d'un avion. Plus particulièrement, dans cet exemple de la figure 1, lesdits premier et deuxième vitrages 1a, 2a sont des vitrages latéraux du cockpit. Chaque vitrage 1a, 2a est solidarisé à cet élément 3a de structure au moyen d'un système d'attachement.

Le système d'attachement du premier vitrage 1a comporte un boulon 4a traversant le vitrage de l'extérieur vers l'intérieur de l'avion. La tête de la vis du boulon 4a est fixée au travers d'une saillie 8a de l'élément de structure 3a, ladite saillie 8a étant en contact avec la surface externe du premier vitrage 1a. L'ensemble formé par la tête de la vis du boulon 4a et ladite saillie 8a constitue les moyens de retenue externe dudit système d'attachement du premier vitrage 1a. Par ailleurs, l'écrou et la rondelle du boulon 4a sont fixés à un bandeau mince 7a en contact avec la surface interne du premier vitrage 1a. L'ensemble formé par l'écrou, la rondelle et ledit bandeau mince 7a constitue les moyens de retenue interne dudit système d'attachement du premier vitrage 1a. On note que la tête de vis est fixée directement à l'élément 3a de structure de l'avion. A contrario, l'écrou et la rondelle sont fixés indirectement (via le vitrage 1a) audit élément 3a de structure de l'avion.

Le système d'attachement du deuxième vitrage 2a se présente sous la forme d'un boulon 5a, de manière sensiblement similaire à celui du système d'attachement du premier vitrage 1a. Toutefois, la tête de la vis du boulon 5a (respectivement l'écrou et la rondelle du boulon 5a) est ici fixée indirectement via un bandeau 6a (respectivement directement, via une saillie 9a de l'élément 3a de structure) à l'élément 3a de structure. On a alors que l'ensemble formé par la tête de la vis du boulon 5a et ledit bandeau 6a (respectivement par l'écrou, la rondelle et ladite saillie 9a) constitue les moyens de retenue externe (respectivement les moyens de retenue interne) dudit système d'attachement du deuxième vitrage 2a.

Dans le cas de la figure 2, un vitrage 1b est utilisé pour former, au moins en partie, un pare-brise d'un avion. Ledit vitrage 1b est solidarisé à un élément 2b de structure de l'avion au moyen d'un système d'attachement. Le système d'attachement du vitrage 1b comporte un boulon 3b. L'ensemble formé par la tête de la vis du boulon 3b et un bandeau mince 5b constitue les moyens de retenue externe de ce système d'attachement. Par ailleurs, l'ensemble formé par l'écrou et la rondelle du boulon 3b, ainsi qu'une saillie 4b de l'élément 2b de structure à laquelle sont fixés ledit écrou et ladite rondelle, constitue les moyens de retenue interne de ce système d'attachement. On note que, dans ce cas, le bandeau 5b est fixé directement à l'élément 2b de structure par boulonnage.

On note qu'il existe encore d'autres systèmes d'attachement. Ainsi, par exemple, dans le cas de vitrages aéronautiques pincés (i.e. vitrages liés à la structure de l'aéronef uniquement par pincement d'un joint périphérique du vitrage), il est d'usage d'employer un système d'attachement dont les éléments de retenue interne et externe sont tous deux fixés directement à la structure de l'aéronef.

Bien que largement déployés aujourd'hui, les systèmes d'attachement décrits ci-avant sont encore loin de représenter des solutions très bien adaptées aux exigences fonctionnelles mentionnées ci-avant pour un vitrage aéronautique.

En effet, le système d'attachement de la figure 1 fait transiter les efforts de pression créés au sein de l'aéronef par une unique surface du vitrage (i.e. la surface externe du premier vitrage 1a et la surface interne du deuxième vitrage 2a), ce qui a pour effet d'induire :
- un couple au niveau du système d'attachement pouvant entrainer des défaillances par délaminage,
- des efforts de flexion au niveau du système d'attachement, ce qui nécessite un épaississement de ce système et/ou d'au moins un pli structural du vitrage (contraintes de masse, et couts associés, notamment pour ce qui concerne les plis structuraux réalisés en PMMA),
- une transmission d'efforts très dissymétrique et donc des singularités de contraintes au niveau du système d'attachement, ce qui limite la capacité à faire transiter des efforts en membrane.

Le système d'attachement de la figure 2, quant à lui, est capable de transférer de façon plus équilibrée les efforts de pressurisation par les deux surfaces du vitrage, ce qui tend à compenser au moins en partie les défauts du système d'attachement de la figure 1. Toutefois, ce système d'attachement de la figure 2 est également très rigide en flexion, ce qui engendre, en cas d'impact d'oiseau proche du système d'attachement, une grande concentration de contraintes dans le vitrage à proximité de l'impact.

Par ailleurs, de manière commune à l'ensemble des systèmes d'attachement connus, la continuité aérodynamique est impactée, de manière prépondérante, par la configuration des moyens de retenue externe. Par exemple, dans le cas du vitrage 1a de la figure 1, le moment induit par le chargement dissymétrique sollicitant en flexion l'élément la saillie 8a impose son épaississement en comparaison du bandeau 6a non sollicité en flexion. Il en résulte une surépaisseur du premier vitrage 1a par apport au deuxième vitrage 2a, de sorte à assurer la continuité aérodynamique entre ledit premier vitrage 1a et les moyens de retenue de ce dernier.

En outre, dans les cas d'un vitrage à fonction antigivre (i.e. vitrage comportant un pli externe chauffant), afin de maximiser la zone de vision du vitrage, des éléments électriques permettant d'assurer la mise en œuvre de ladite fonction antigivre sont positionnés à l'extrémité de la zone transparente du vitrage (exemple : espace 6b illustré sur la figure 2 et par lequel passent lesdits éléments électriques). Cette configuration implique que le pli chauffant (exemple : pli 7b illustré sur la figure 2) ne peut pas s'étendre jusqu'aux extrémités des plis structuraux qu'il protège. Il en résulte une faiblesse en termes d'étanchéité au point de rencontre entre les moyens de retenue externe et la surface externe du vitrage, ce qui est problématique au regard de la sensibilité des éléments électriques vis-à-vis de l'humidité. Certaines solutions de l'état de la technique proposent de corriger cette faiblesse en introduisant un élément en « Zed » formant barrière audit point de rencontre. Toutefois, un tel élément en Zed, outre le fait d'induire une discontinuité aérodynamique, est un élément métallique dont il faut gérer la charge électrostatique, et qui est onéreux à produire.

Des ensembles vitrés sont également connus des documents US 2013/026296 A1, US 3 009 845 A et US 9 073 620 B2.

### Exposé de l'invention

La présente invention a pour objectif de remédier à tout ou partie des inconvénients de l'art antérieur, notamment ceux exposés ci-avant, en proposant une solution qui permette d'obtenir un ensemble vitré apte à équilibrer la transmission des efforts de pression en membrane de manière beaucoup plus efficace que les solutions de l'art antérieur, qui limite fortement le risque de délaminage, qui ne nécessite pas le recours à une épaisseur excessive de pli structural, qui est conforme à l'exigence « fail safe », qui est apte à assurer une continuité aérodynamique avec l'enveloppe de l'aéronef, et qui est en outre particulièrement résistant aux impacts d'oiseaux, tout en étant simple de réalisation et peu onéreux.

A cet effet, et selon un premier aspect, l'invention concerne un ensemble vitré pour un aéronef, ledit ensemble vitré comportant un vitrage feuilleté comprenant un ensemble de pli structuraux dont un premier pli structural ainsi qu'un deuxième pli structural fixé au premier pli structural par l'intermédiaire d'une couche intercalaire. Ledit ensemble vitré comporte également :
- un élément de retenue dont une première partie est insérée de manière fixe dans au moins ladite couche intercalaire au niveau du chant du vitrage feuilleté ainsi que sur au moins une portion de sa périphérie, préférentiellement sur toute la périphérie du vitrage feuilleté, et dont une deuxième partie prolonge la première partie en dehors du vitrage feuilleté,
- une pluralité de taquets agencés dans des cavités respectives réalisées dans le vitrage feuilleté de sorte que lesdits taquets s'étendent de manière sensiblement perpendiculaire au travers de la première partie de l'élément de retenue ainsi que dans chacun desdits plis structuraux.

Le fait d'avoir de tels taquets se révèle particulièrement avantageux en ce que cela permet, en combinaison avec l'élément de retenue au travers duquel ils s'étendent, de lisser (i.e. répartir de manière équilibrée) les efforts de membrane entre tous les plis entrant dans la composition du vitrage feuilleté, ce lissage s'effectuant de façon homogène dans l'épaisseur desdits plis. Dès lors, les charges admissibles sont considérablement accrues en comparaison avec l'état de la technique, ce qui permet, notamment, d'assurer une résistance très importante aux charges de pression ainsi qu'aux impacts d'oiseaux, ainsi que le respect de l'exigence « fail safe ».

Cela permet également de faire transiter les efforts de membrane par le centre du vitrage feuilleté.

De cette manière, l'introduction d'un couple fléchissant au niveau de la périphérie du vitrage feuilleté est évitée, réduisant ainsi très fortement les risques de délaminage.

Par ailleurs, en évitant l'apparition d'un tel couple de flexion, et en homogénéisant la transmission d'efforts entre les plis structuraux, il n'est plus nécessaire d'utiliser des plis structuraux d'épaisseurs distinctes, comme cela est souvent le cas dans l'état de la technique notamment pour ce qui concerne les vitrages en plastique et dans le but d'accroître la raideur en flexion ainsi que de limiter les risques de délaminage. Il devient alors possible d'utiliser des plis structuraux plus fins que ceux généralement utilisés dans l'état de la technique, ce qui contribue non seulement à réduire le coût de réalisation de l'ensemble vitré selon l'invention mais également à en simplifier la production, les plis structuraux épais étant connus pour être complexes à fabriquer (exemple : simplification des manutentions lors des opérations de production en masse, limitation des procédés d'étirage des PMMA étirés et d'extrusion des PC, limitation des complexités de mise en forme).

A cela s'ajoute également le fait que la présence de plis structuraux épais réalisés en PMMA étiré est connue pour être néfaste aux ruptures par cisaillement du plan d'étirage desdits plis (particulièrement faible par rapport aux autres directions de fissuration). En conséquence, l'invention permet également de réduire le risque d'apparition de telles ruptures, notamment lors d'impacts d'oiseaux.

De plus, puisqu'il devient possible d'utiliser des plis structuraux plus minces en plus grand nombre, en substitution de plis plus épais, il en découle la possibilité de renforcer encore plus le respect de l'exigence « fail safe ».

Un autre aspect important de l'invention réside dans le fait que la présence d'un élément de retenue externe est ici supprimée en comparaison avec les solutions de l'état de la technique. Il découle de ceci une pluralité d'avantages, à savoir :
- facilité à assurer une continuité aérodynamique sans créer une zone de faiblesse du point de vue de l'étanchéité au niveau de l'enveloppe de l'aéronef, et donc absence de recours à un élément en « Zed »,
- possibilité de profiter d'une plus grande longueur de verre externe, notamment de verre externe supportant une fonction antigivre, ce qui, par exemple, permet de disposer d'une marge de manœuvre plus importante pour positionner, en dehors de la zone de vision du cockpit, des électrodes d'alimentations d'un système antigivre,
- dans le cas où une feuille de verre revêtue d'une couche chauffante est utilisée (voir ci-après), minimisation de l'épaisseur de la couche intercalaire permettant de fixer cette feuille de verre au premier pli structural, ce qui est avantageux au regard de la menace de grêle.

Encore un autre aspect important de l'invention réside dans le fait que l'ensemble vitré selon l'invention permet d'éviter un montage par pincement. Dit autrement, la fixation de l'ensemble vitré selon l'invention à la structure de l'aéronef ne génère aucune compression du vitrage feuilleté. Cela permet avantageusement d'éliminer les défauts propres à un montage par pincement, comme typiquement les problèmes de fluage périphérique (écoulement de couche intercalaire en dehors du vitrage feuilleté, compression irréversible de joints, etc.) responsables, notamment, de perte d'étanchéité, de bullage par mise en dépression de couches intercalaires, de dégradation de l'optique par perte de parallélisme des plis structuraux, etc.

L'élément de retenue est configuré pour attacher le vitrage feuilleté à l'aéronef et notamment à une structure interne de l'aéronef.

Dans des modes particuliers de réalisation, l'ensemble vitré peut comporter en outre l'une ou plusieurs des caractéristiques suivantes, prises isolément ou selon toutes les combinaisons techniquement possibles.

Dans des modes particuliers de réalisation, au moins un taquet comporte un corps réalisé en matériau métallique, par exemple en titane ou en acier.

Dans des modes particuliers de réalisation, au moins un taquet comporte un manchon périphérique audit corps et réalisé en matériau élastique, par exemple en élastomère.

La mise en œuvre d'un tel manchon périphérique est avantageuse en ce qu'elle permet de contribuer encore plus au lissage des efforts de membrane entre tous les plis entrant dans la composition du vitrage feuilleté. En outre, si plusieurs taquets sont équipés de manchons périphériques respectifs, ledit lissage des efforts s'effectue également entre ces taquets.

Dans des modes particuliers de réalisation, l'élément de retenue est réalisé en matériau métallique, par exemple en titane, en aluminium, ou en acier inoxydable, ou bien encore est réalisé en matériau composite, par exemple en matériau composite renforcé de fibres de carbone ou de verre.

Dans des modes particuliers de réalisation, au moins un taquet est agencé dans la cavité qui lui est associée avec un jeu.

De cette manière, il est possible d'avoir un degré de liberté en rotation pour le taquet à l'intérieur de la cavité dans laquelle il est placé, ce qui permet non seulement de favoriser encore plus la répartition uniforme des efforts de membrane sur les plis structuraux, mais également d'éviter l'apparition d'un couple fléchissant susceptible de créer un problème de délaminage (ledit couple fléchissant fait référence à une contrainte sur le vitrage feuilleté liée à une rotation par rapport au plan dans lequel s'étend l'élément de retenue).

Dans des modes particuliers de réalisation, ledit ensemble de plis structuraux comporte au moins trois plis structuraux, par exemple quatre plis structuraux, préférentiellement quatre plis structuraux répartis par paire de part et d'autre de l'élément de retenue, une couche intercalaire étant agencée entre chaque paire de plis structuraux.

Comme évoqué ci-avant, le fait d'avoir plus de deux plis structuraux permet, notamment, de renforcer encore plus le respect de l'exigence « fail safe ».

Dans des modes particuliers de réalisation, les plis structuraux présentent des épaisseurs identiques, ou bien au moins deux plis structuraux présentent des épaisseurs distinctes.

Dans des modes particuliers de réalisation, au moins une cavité accueillant un taquet est strictement incluse dans le vitrage feuilleté, ou bien débouchante au travers d'un seul pli structural, ou bien débouchante au travers de tous les plis structuraux.

Dans des modes particuliers de réalisation, lorsque ladite au moins une cavité est débouchante au travers de tous les plis structuraux, le corps du taquet agencé dans ladite au moins une cavité est creux.

De telles dispositions sont avantageuses en ce qu'elles permettent la transmission d'éléments électriques (chauffage, sondes, etc.) à travers l'épaisseur du vitrage feuilleté.

Dans des modes particuliers de réalisation, la feuille de verre d'un pli structural est réalisée en verre minéral ou en verre organique.

Dans des modes particuliers de réalisation, chaque couche intercalaire est une couche adhésive réalisée en polyuréthane thermoplastique (TPU), polyvinylbutyral (PVB), copolymère éthylène - acétate de vinyle (EVA), résine ionomère, ou en résine de coulée.

Dans des modes particuliers de réalisation, le vitrage feuilleté comporte en outre une feuille de verre revêtue d'une couche chauffante, destinée à être en contact avec l'environnement extérieur et fixée à l'ensemble de plis structuraux par l'intermédiaire d'une couche adhésive intercalaire.

Une telle feuille de verre chauffante est avantageuse en ce qu'elle permet de protéger le vitrage feuilleté du givre, et constitue également une protection supplémentaire de l'ensemble de plis structuraux à l'égard de projections de sable, de gravillons, de rayures d'essuie-glace, etc.

Dans des modes particuliers de réalisation, la première partie de l'élément de retenue est noyée dans la couche intercalaire par l'intermédiaire de laquelle le premier pli structural est collé au deuxième pli structural.

Dans des modes particuliers de réalisation, la première partie de l'élément de retenue est fixée par collage dans un logement périphérique usiné dans ladite couche intercalaire, voire également dans au moins un desdits premier et deuxième plis structuraux, par exemple de manière symétrique dans lesdits premier et deuxième plis structuraux.

Ces dispositions ont cela d'avantageux qu'il est possible de réaliser ledit logement périphérique une fois le vitrage feuilleté complètement assemblé. Autrement dit, à la différence du cas où la première partie de l'élément de retenue est noyée dans la couche intercalaire, il n'est pas nécessaire ici d'envisager une fixation de ladite première partie dès l'étape d'assemblage du vitrage feuilleté.

Dans des modes particuliers de réalisation, les feuilles de verre des plis structuraux sont réalisées en matériau polymère, les cavités étant agencées dans lesdites feuilles de verre.

Dans des modes particuliers de réalisation, les feuilles de verre des plis structuraux sont réalisées en verre minéral, chaque pli structural comportant :
- un talon réalisé en matériau composite et une cale réalisée en matériau souple, le talon et la cale étant agencés sur toute la périphérie de la feuille de verre au niveau de son chant, ladite cale étant en outre positionnée entre la feuille de verre et le talon,
- des inserts réalisés en matériau composite, agencés de part et d'autre du pli structural et fixés contre le talon, la cale ainsi qu'une partie de la feuille de verre.
En outre, les cavités s'étendent au travers des talons ainsi que des inserts, l'élément de retenue étant noyé dans la couche intercalaire par l'intermédiaire de laquelle le premier pli structural est collé au deuxième pli structural.

Dans des modes particuliers de réalisation, la deuxième partie de l'élément de retenue est une partie d'attache du vitrage feuilleté à une structure interne de l'aéronef. En d'autres termes, la deuxième partie de l'élément de retenue prolongeant la première partie en dehors du vitrage feuilleté est configurée pour être fixée à une structure interne de l'aéronef.

La deuxième partie de l'élément de retenue est destinée à être fixée à une structure interne de l'aéronef au moyen d'un système de fixation.

Selon un deuxième aspect, l'invention concerne un procédé de fabrication d'un ensemble vitré selon l'invention. Ledit procédé comporte des étapes de :
- assemblage entre eux des plis structuraux, de sorte à former ledit vitrage feuilleté,
- assemblage de l'élément de retenue avec ledit vitrage feuilleté, de sorte que ladite première partie est insérée de manière fixe dans au moins ladite couche intercalaire par l'intermédiaire de laquelle le premier pli structural est fixé au deuxième pli structural, au niveau du chant du vitrage feuilleté ainsi que sur toute sa périphérie, et de sorte que ladite deuxième partie prolonge la première partie en dehors du vitrage feuilleté,
- perçage du vitrage feuilleté et de l'élément de retenue, de sorte à former lesdites cavités,
- agencement desdits taquets dans lesdites cavités.

Dans des modes particuliers de mise en œuvre, le procédé de fabrication peut comporter en outre l'une ou plusieurs des caractéristiques suivantes, prises isolément ou selon toutes les combinaisons techniquement possibles.

Dans des modes particuliers de mise en œuvre, l'étape d'assemblage de l'élément de retenue avec le vitrage feuilleté est réalisée pendant la mise en œuvre de l'étape d'assemblage entre eux des premier et deuxième plis structuraux, en noyant la première partie de l'élément de retenue dans la couche intercalaire par l'intermédiaire de laquelle le premier pli structural est fixé au deuxième pli structural.

Dans des modes particuliers de mise en œuvre, l'étape d'assemblage de l'élément de retenue avec le vitrage feuilleté est réalisée une fois l'étape d'assemblage entre eux des premier et deuxième plis structuraux achevée, et comprend :
- un usinage d'un logement périphérique dans ladite couche intercalaire, voire également dans au moins un desdits premier et deuxième plis structuraux, par exemple de manière symétrique dans lesdits premier et deuxième plis structuraux,
- une fixation par collage de la première partie de l'élément de retenue dans ledit logement périphérique.

Selon un troisième aspect, l'invention concerne un aéronef comportant un ensemble vitré selon l'invention agencé en continuité aérodynamique avec l'enveloppe dudit aéronef, la deuxième partie de l'élément de retenue, dite « partie d'attache », étant fixée à la structure interne de l'aéronef.

Dans des modes particuliers de réalisation, l'aéronef peut comporter en outre l'une ou plusieurs des caractéristiques suivantes, prises isolément ou selon toutes les combinaisons techniquement possibles.

Dans des modes particuliers de réalisation, la partie d'attache est fixée à une partie dite « de support » de la structure interne de l'aéronef, ladite partie de support étant agencée en regard du chant du vitrage feuilleté, ladite partie d'attache étant agencée entre l'enveloppe de l'aéronef et ladite partie de support.

Dans des modes particuliers de réalisation, la partie d'attache est fixée à une partie dite « de support » de la structure interne de l'aéronef, ladite partie de support étant agencée à distance du deuxième pli structural vers l'intérieur de l'aéronef, ladite partie d'attache étant agencée entre l'enveloppe de l'aéronef et ladite partie de support, la fixation de la partie d'attache étant réalisée au moyen d'une cale positionnée entre ladite partie d'attache et la partie de support, un élément de contact réalisé dans un matériau plus ductile que le vitrage étant en outre inséré entre la partie de support et le deuxième pli structural.

Dans des modes particuliers de réalisation, la partie d'attache est fixée à une partie dite « de support » de la structure interne de l'aéronef, ladite partie de support étant agencée entre l'enveloppe de l'aéronef et ladite partie d'attache.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente schématiquement une variante de réalisation d'un système d'attachement selon l'état de la technique ;
[Fig. 2] la figure 2 représente schématiquement une autre variante de réalisation d'un système d'attachement selon l'état de la technique ;
[Fig. 3] la figure 3 représente schématiquement, dans son environnement, un mode particulier de réalisation d'un ensemble vitré selon l'invention ainsi qu'un mode particulier de fixation dudit ensemble vitré à la structure d'un aéronef ;
[Fig. 4] la figure 4 représente schématiquement un autre mode de réalisation de l'ensemble vitré ;
[Fig. 5] la figure 5 représente schématiquement un autre mode de réalisation de l'ensemble vitré ;
[Fig. 6] la figure 6 représente schématiquement un autre mode de réalisation de l'ensemble vitré ;
[Fig. 7] la figure 7 représente schématiquement un autre mode de réalisation de l'ensemble vitré ;
[Fig. 8] la figure 8 représente schématiquement un autre mode de réalisation de l'ensemble vitré ;
[Fig. 9] la figure 9 représente schématiquement un autre mode de réalisation de l'ensemble vitré ;
[Fig. 10] la figure 10 représente, sous forme d'ordinogramme, un mode particulier de mise en œuvre d'un procédé de fabrication de l'ensemble vitré de la figure 3 ;
[Fig. 11] la figure 11 représente, sous forme d'ordinogramme, un mode particulier de mise en œuvre du procédé de fabrication de l'ensemble vitré de la figure 4 ;
[Fig. 12] la figure 12 représente schématiquement un autre mode particulier de fixation de l'ensemble vitré de la figure 3 à la structure de l'aéronef ;
[Fig. 13] la figure 13 représente schématiquement un autre mode particulier de fixation de l'ensemble vitré de la figure 3 à la structure de l'aéronef.

### Description de modes de réalisation

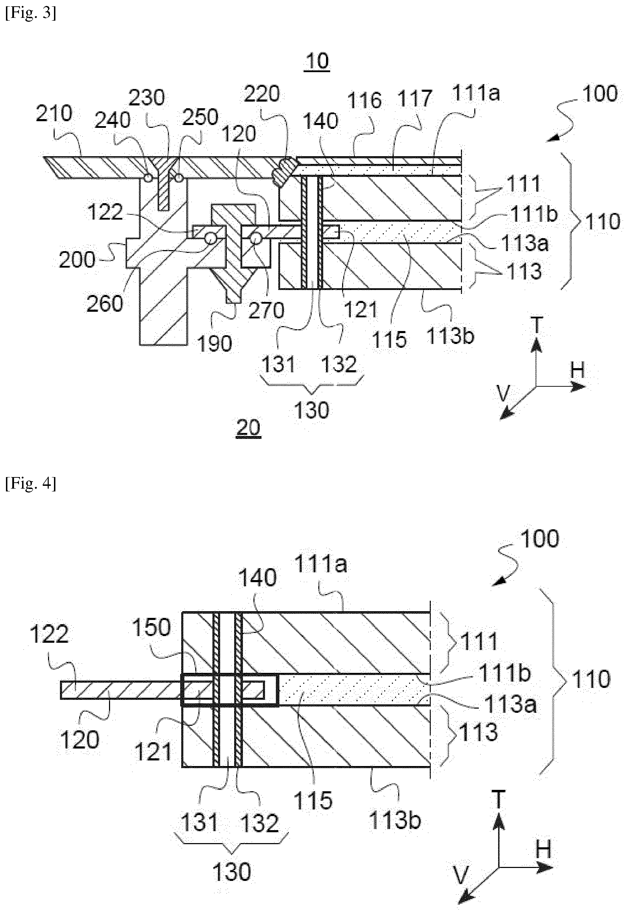

La figure 3 représente schématiquement, dans son environnement, un mode particulier de réalisation d'un ensemble vitré 100 selon l'invention.

Dans la suite de la description, on considère à titre nullement limitatif les orientations verticale, horizontale et transversale en référence au trièdre (V, H, T) représenté sur la figure 3. Aussi, l'ensemble vitré 100 de la figure 3 y est représenté suivant une coupe transversale (i.e. dans l'épaisseur dudit ensemble vitré 100).

Par convention, les termes « supérieur » et « inférieur » ou « haut » et « bas » ou « dessus » et « dessous » sont utilisés en référence à l'orientation transversale. Les termes « gauche » et « droit » sont quant à eux utilisés en référence à l'orientation horizontale.

Dans la figure 3, l'ensemble vitré 100 y est représenté tel que déjà intégré (fixé) à un aéronef. La suite de la description vise plus spécifiquement un aéronef de type avion commercial, encore dit plus simplement « avion ». L'invention s'applique néanmoins, de manière nullement limitative, à tout type d'aéronef destiné à être soumis à des différentiels de pressions entre un environnement extérieur 10 et l'intérieur 20 dudit aéronef, comme par exemple un avion de transport de marchandises, un avion de chasse, un hélicoptère, etc.

Par ailleurs, pour la suite de la description, on considère de manière nullement limitative que l'ensemble vitré 100 est constitutif du vitrage du cockpit dudit avion commercial, plus précisément du pare-brise de ce vitrage cockpit. Cela étant, de telles dispositions ne sont pas limitatives de l'invention, et rien n'exclut d'envisager que l'ensemble vitré 100 est constitutif d'un autre vitrage du cockpit, comme par exemple un vitrage latéral dudit cockpit (i.e. une partie moins soumise au risque d'un impact d'oiseau en comparaison avec le pare-brise), ou bien encore qu'il est constitutif d'un vitrage cabine, comme par exemple un hublot.

Dans un premier temps, on va décrire la configuration détaillée de l'ensemble vitré 100 seul tel que mis en œuvre dans le mode de réalisation de la figure 3, ainsi que plusieurs variantes de réalisation de celui-ci. Puis, dans un deuxième temps, on décrit la manière dont ledit ensemble vitré 100 est intégré à l'avion en étant fixé (i.e. solidarisé, assujetti) à la structure de celui-ci.

Dans le présent mode de réalisation, l'ensemble vitré 100 comporte un vitrage feuilleté 110. Ledit vitrage feuilleté 110 comprend un ensemble de plis structuraux dont un premier pli structural 111 ainsi qu'un deuxième pli structural 113 collé au premier pli structural 111 par l'intermédiaire d'une couche adhésive intercalaire 115.

Plus particulièrement, et tel qu'illustré par la figure 3 :
- le premier pli structural 111 est une feuille de verre agencée en regard de l'environnement extérieur de l'avion. Ladite feuille de verre 111 comporte une face supérieure 111a ainsi qu'une face inférieure 111b ;
- le deuxième pli structural 113 est une feuille de verre collée au premier pli structural 111 par l'intermédiaire de ladite couche adhésive intercalaire 115. Ladite feuille de verre 113 comporte une face supérieure 113a ainsi qu'une face inférieure 113b.

On comprend dès lors que la couche adhésive intercalaire 115 est disposée entre la face inférieure 111b de la feuille de verre 111 et la face supérieure 113a de la feuille de verre 113.

Lesdites feuilles de verre 111, 114 sont réalisées en verre organique, plus particulièrement, dans le mode de réalisation décrit ici, en polyméthacrylate de méthyle étiré (PMMA étiré).

Rien n'exclut cependant de considérer un autre matériau polymère, comme par exemple du polyméthacrylate de méthyle non étiré, du polycarbonate (PC), du polytéréphtalate d'éthylène (PET) ou du polyuréthane (PU).

Pour ce qui concerne la couche adhésive intercalaire 115, elle est réalisée en polyuréthane thermoplastique, polyvinylbutyral, copolymère éthylène - acétate de vinyle (acronyme « EVA » dans la littérature technique concernée), résine ionomère, ou en résine de coulée. Ces dispositions s'appliquant également à toute autre couche adhésive intercalaire décrite ci-après.

Il est à noter que, dans le présent mode de réalisation, ledit ensemble de plis structuraux comportent uniquement le premier pli structural 111 et le deuxième pli structural 113. Le fait de considérer un tel ensemble de plis structuraux ne constitue cependant qu'une variante d'implémentation de l'invention. Rien n'exclut en effet de considérer d'autres modes de réalisation dans lesquels ledit ensemble de plis structuraux comporte au moins trois plis structuraux, par exemple quatre plis structuraux, préférentiellement quatre plis structuraux répartis par paire de part et d'autre d'un élément de retenue comme cela est décrit ultérieurement dans le cadre d'une autre variante de réalisation de l'ensemble vitré.

Dans le mode de réalisation décrit ici, les premier et deuxième plis structuraux 111, 113 présentent des épaisseurs identiques (l'épaisseur d'un pli structural étant comptée dans la direction transversale T, et correspondant ici, pour ce mode de réalisation, à l'épaisseur des feuilles de verre). Par exemple, l'épaisseur desdits premier et deuxième plis structuraux 111, 113 est comprise entre 3 mm et 25 mm.

Rien n'exclut cependant d'envisager d'autres modes de réalisation dans lesquels, par exemple, le premier pli structural 111 présente une épaisseur distincte (i.e. supérieure ou inférieure) à celle du deuxième pli structural 113. A titre d'exemple nullement limitatif, l'épaisseur du premier pli structural 111 est égale à 16 mm, alors que l'épaisseur du deuxième pli structural 113 est égale à 12 mm.

Par ailleurs, et tel qu'illustré par la figure 3, le vitrage feuilleté 110 comporte en outre une feuille de verre 116 revêtue d'une couche chauffante, en contact avec l'environnement extérieur 10 et fixée au premier pli structural 111 par l'intermédiaire d'une couche adhésive 117. Une telle feuille de verre 116 est avantageuse en ce qu'elle permet de protéger le vitrage feuilleté 110 du givre, et constitue également une protection supplémentaire du premier pli structural 111 à l'égard de projections de sable, de gravillons, de rayures d'essuie-glace, etc.

La mise en œuvre d'une telle feuille de verre 116, outre le fait d'être optionnelle, est bien connue de l'homme de l'art, si bien qu'elle n'est pas davantage détaillée ici. Il convient par ailleurs de noter que ladite feuille de verre 116 ne forme pas un pli structural au sens de l'invention, mais plutôt un pli mince externe.

Conformément à l'invention, et tel qu'illustré par la figure 3, l'ensemble vitré 100 comporte encore un élément dit « de retenue 120 » ainsi qu'une pluralité de taquets 130.

L'élément de retenue 120 est configuré pour attacher le vitrage feuilleté 110 de l'ensemble vitré 100 à l'aéronef et notamment pour attacher le vitrage feuilleté 110 à une structure interne de l'aéronef.

L'élément de retenue 120 (« retainer » en anglais) comporte une première partie 121 insérée de manière fixe (i.e. de manière non amovible) dans la couche adhésive intercalaire 115 au niveau du chant du vitrage feuilleté 110 et sur toute la périphérie dudit vitrage feuilleté 110.

Autrement dit, ladite première partie 121 (mais donc a fortiori également l'ensemble de l'élément de retenue 120) forme un cadre, ce qui d'un point de vue géométrique, revient à dire que, dans le plan (V, H) de la figure 3, ladite première partie 121 correspond à un domaine doublement connexe (i.e. un domaine surfacique comportant un trou).

L'élément de retenue comporte également une deuxième partie 122 qui prolonge la première partie 121 en dehors du vitrage feuilleté 110. Autrement dit, de manière similaire à ce qui a été mentionné ci-avant, ladite deuxième partie 122 prend également la forme, dans le plan (V, H) de la figure 3, d'un domaine doublement connexe.

La deuxième partie 122 de l'élément de retenue 120 est configurée pour être fixée à une structure interne de l'aéronef, notamment la deuxième partie 122 est configurée pour être fixée à ladite structure interne de l'aéronef au moyen d'un système de fixation.

La deuxième partie 122 de l'élément de retenue forme une partie d'attache de l'élément de retenue à ladite structure interne de l'aéronef.

Comme cela ressort de la figure 3, ladite deuxième partie 122 est fixée par boulonnage à la structure interne de l'avion, de sorte qu'il est aussi fait mention de l'expression « partie d'attache 122 » pour désigner ladite deuxième partie 122 dans la suite de la description. Ces aspects sont décrits plus en détail ultérieurement, mais permettent d'ores et déjà de comprendre que l'élément de retenue 120 peut être qualifié de « interne » au sens où il est fixé au vitrage feuilleté 110 au niveau d'une surface (chant) positionnée à l'intérieur 20 de l'avion, pour se déployer uniquement au sein dudit intérieur 20.

Plus particulièrement, dans le mode de réalisation de la figure 3, l'élément de retenue 120 s'étend de manière sensiblement plane dans le plan moyen du vitrage feuilleté 110 ainsi que de manière sensiblement parallèle aux premier et deuxième plis structuraux 111, 113. En outre, la première partie 121 de l'élément de retenue 120 est ici noyée (i.e. entièrement contenue) dans la couche adhésive intercalaire 115.

Il est à noter que pour obtenir une telle configuration de la première partie 121 (i.e. noyée dans la couche 115), il convient d'envisager un assemblage de l'élément de retenue 120 avec le vitrage feuilleté 110 au cours d'une étape d'assemblage (i.e. de feuilletage) dudit vitrage feuilleté 110. Ces aspects sont également décrits plus en détail ultérieurement en référence à un procédé de fabrication selon l'invention dudit ensemble vitré 100.

Différents matériaux peuvent être envisagés pour la réalisation de l'élément de retenue 120. Ainsi, selon un exemple de réalisation, l'élément de retenue 120 est réalisé en matériau métallique, par exemple en titane, aluminium, ou acier inoxydable.

Selon un autre exemple de réalisation, l'élément de retenue 120 est réalisé en matériau composite, par exemple en matériau composite renforcé de fibres de carbone ou de verre.

Bien qu'il soit considéré dans le mode de réalisation décrit ici que l'élément de retenue 120 est inséré (via ladite première partie 121) de manière fixe dans la couche adhésive intercalaire 115 sur toute la périphérie dudit vitrage feuilleté 110, d'autres variantes restent envisageables, en particulier de sorte que ladite insertion s'effectue uniquement sur une portion de la périphérie dudit vitrage feuilleté 110 (auquel cas, l'élément de retenue 120 ne prend bien entendu plus la forme d'un cadre).

En outre, indépendamment du fait que l'élément de retenue 120 est inséré sur tout ou partie de la périphérie du vitrage feuilleté 110, ledit élément de retenue peut être réalisé d'un seul tenant ou bien, en alternative, en plusieurs pièces jointes entre elles, éventuellement avec recouvrement. De plus, si l'élément de retenue 120 est inséré seulement sur une portion de la périphérie du vitrage feuilleté 110, ledit élément de retenue 120 peut être réalisé en plusieurs pièces, certaines desdites pièces pouvant être disjointes les unes des autres.

Il est également considéré dans le présent mode de réalisation que la deuxième partie 122 est fixée par boulonnage à la structure de l'avion. De telles dispositions ne sont toutefois pas limitatives de l'invention, et tout moyen de fixation adapté connu de l'homme de l'art peut bien entendu être envisagé (exemple : collage).

Par ailleurs, pour des raisons de simplification, la description du mode de réalisation de la figure 3 est désormais réalisée en faisant référence à un unique taquet 130. Il importe toutefois de noter que les caractéristiques techniques maintenant décrites s'appliquent à tout ou partie des taquets 130 équipant l'ensemble vitré 100. Qui plus est, les taquets 130 peuvent être répartis de différentes manières le long de la périphérie du vitrage feuilleté 110, par exemple de manière uniforme, selon un exemple encore plus particulier tous les 5 cm.

Le taquet 130 illustré dans la figure 3 est agencé dans une cavité 140 réalisée dans le vitrage feuilleté 110 de sorte que ledit taquet 130 s'étende de manière sensiblement perpendiculaire au travers de la première partie 121 de l'élément de retenue 120 ainsi que dans (i.e. à l'intérieur de) chacun des premier et deuxième plis structuraux 111, 113. Il résulte de ces dispositions, ainsi que de la configuration de l'élément de retenue 120, que le taquet 130 et la cavité 140 s'étendent tous deux dans la direction transversale T de manière sensiblement perpendiculaire aux face supérieure 111a et face inférieure 113b appartenant respectivement aux premier et deuxième plis structuraux 111, 113.

Le fait d'avoir un tel taquet 130 se révèle particulièrement avantageux en ce que cela permet, en combinaison avec l'élément de retenue 120 au travers duquel il s'étend, de lisser (i.e. répartir de manière équilibrée) les efforts de membrane entre tous les plis entrant dans la composition du vitrage feuilleté 110, mais aussi de faire transiter les efforts de membrane par le centre du vitrage feuilleté 110. Ainsi, cela évite l'introduction d'un couple fléchissant au niveau de la périphérie du vitrage feuilleté 110, de sorte à en limiter la flexion qui est, dans l'état de la technique, à l'origine des mécanismes de délaminage.

Plus particulièrement, dans le mode de réalisation de la figure 3, le taquet 130 comporte un corps 131 réalisé en matériau métallique, par exemple en titane ou en acier, ainsi qu'un manchon 132 périphérique audit corps 131 et réalisé en matériau élastique, par exemple en élastomère (le manchon 132 est hachuré sur la figure 3).

Il importe de noter que la mise en œuvre d'un tel manchon périphérique 132 est optionnelle au sens de la présente invention, et qu'elle permet, de manière avantageuse, de contribuer encore plus au lissage des efforts de membrane entre tous les plis entrant dans la composition du vitrage feuilleté 110. En outre, d'autres matériaux peuvent être envisagés pour le corps 131 du taquet 130, comme par exemple la céramique ou un matériau composite bas carbone.

Par ailleurs, dans le présent mode de réalisation, le taquet 130 est inséré sans jeu dans la cavité 140. Par « jeu », on fait bien entendu référence ici à un espace libre compté dans le plan orthogonal à la direction dans laquelle s'étend le taquet 130.

Le fait de considérer une telle insertion sans jeu ne constitue cependant qu'une variante d'implémentation de l'invention. Ainsi, rien n'exclut d'envisager que la cavité 140 et le taquet 130 sont respectivement dimensionnés de sorte qu'il existe un jeu entre eux (non représentés sur les figures). De cette manière, il est possible d'avoir un degré de liberté en rotation pour le taquet 130 à l'intérieur de la cavité 140, et donc en définitive entre le taquet 130 et l'élément de retenue 120, ce qui permet non seulement de favoriser encore plus la répartition uniforme des efforts de membrane sur les plis structuraux 111, 113, mais également d'éviter l'apparition d'un couple fléchissant susceptible de créer un problème de délaminage.

Dans le mode de réalisation décrit ici, et tel qu'illustré par la figure 3, la cavité 140 est débouchante au travers desdits premier et deuxième plis structuraux 111, 113. Autrement dit, le logement transverse 140 débouche au niveau de la face supérieure 111a du premier pli structural 111, ainsi qu'au niveau de la face inférieure 113b du deuxième pli structural 113.

Il est à noter que le taquet 130 présente ici une taille identique à celle de la cavité 140 selon la direction T (autrement dit, la longueur du taquet 130 est identique à celle de l'épaisseur du vitrage feuilleté 110). Il reste bien entendu possible d'envisager des variantes dans lesquelles la taille dudit taquet 130 est inférieure ou supérieure à celle de la cavité 140 selon la direction T, dès lors que ledit taquet 130 s'étend au travers de la première partie 121 de l'élément de retenue 120 ainsi que dans chacun desdits plis structuraux 111, 113.

Avantageusement, en complément du fait que la cavité 140 est débouchante au travers desdits premier et deuxième plis structuraux 111, 113, le corps 131 du taquet 130 est creux. De telles dispositions permettent la transmission d'éléments électriques (fils d'alimentation d'un système de chauffage, fils de connexion de sondes, etc.) à travers l'épaisseur du vitrage feuilleté 110.

On comprend néanmoins que le fait de considérer un corps 131 creux ne constitue qu'une variante de réalisation de l'invention, et rien n'exclut bien entendu d'envisager qu'il soit plein.

L'ensemble vitré 100 a été décrit jusqu'à présent en relation avec le mode de réalisation de la figure 3. L'invention couvre néanmoins encore d'autres modes de réalisations qui sont maintenant décrits et illustrés, avant que ce ne soit décrit la manière donc l'ensemble vitré 100 de la figure 3 est fixé à la structure de l'avion. On note que pour ces autres modes, et en comparaison avec la figure 3, seul l'ensemble vitré 100 y est représenté. En outre, et uniquement à titre de simplification des figures, le pli chauffant 116 ainsi que la couche adhésive 117 sont également omis.

La figure 4 représente schématiquement un autre mode de réalisation de l'ensemble vitré 100.

Le mode de réalisation de la figure 4 reprend l'ensemble des caractéristiques du mode de réalisation de la figure 3, à la différence près qu'au lieu que la première partie 121 de l'élément de retenue 120 soit noyée dans la couche adhésive intercalaire 115 (au cours de l'étape d'assemblage du vitrage feuilleté 110), ladite première partie 121 est désormais fixée par collage dans un logement périphérique 150 usiné dans ladite couche adhésive intercalaire 115 (i.e. au niveau chant du vitrage feuilleté 110).

Ces dispositions ont cela d'avantageux qu'il est possible de réaliser ledit logement périphérique 150 une fois le vitrage feuilleté 110 complètement assemblé. Autrement dit, à la différence du cas où la première partie 121 de l'élément de retenue 120 est noyée dans la couche adhésive intercalaire 115, il n'est pas nécessaire ici d'envisager une fixation de ladite première partie 121 dès l'étape d'assemblage du vitrage feuilleté 110.

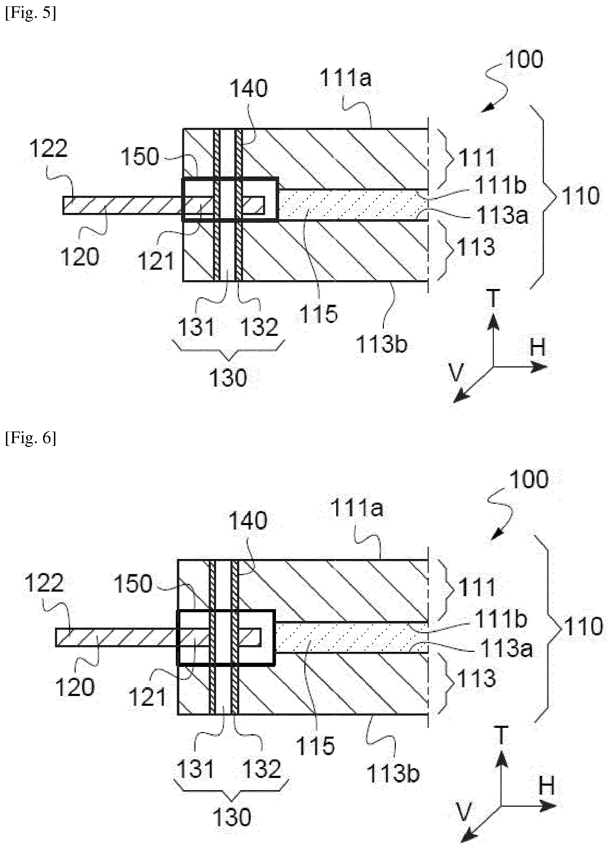

Il est à noter que le logement périphérique 150 est ici usiné uniquement dans la couche adhésive intercalaire 115. Toutefois, il est possible d'envisager encore d'autres variantes, telles qu'illustrées par les figures 5 et 6.

Ainsi, dans la figure 5, le logement périphérique 150 est usiné dans la couche adhésive intercalaire 115 ainsi que dans le seul premier pli structural 111.

On comprend bien entendu qu'il est aussi possible d'envisager que le logement périphérique 150 est usiné dans la couche adhésive intercalaire 115 ainsi que dans le seul deuxième pli structural 113.

Dans la figure 6, le logement périphérique 150 est usiné dans la couche adhésive intercalaire 115 ainsi que de manière symétrique dans lesdits premier et deuxième plis structuraux 111, 113.

Là aussi, on comprend que le logement périphérique 150 peut être usiné dans lesdits premier et deuxième plis structuraux 111, 113 sans que cet usinage ne soit symétrique.

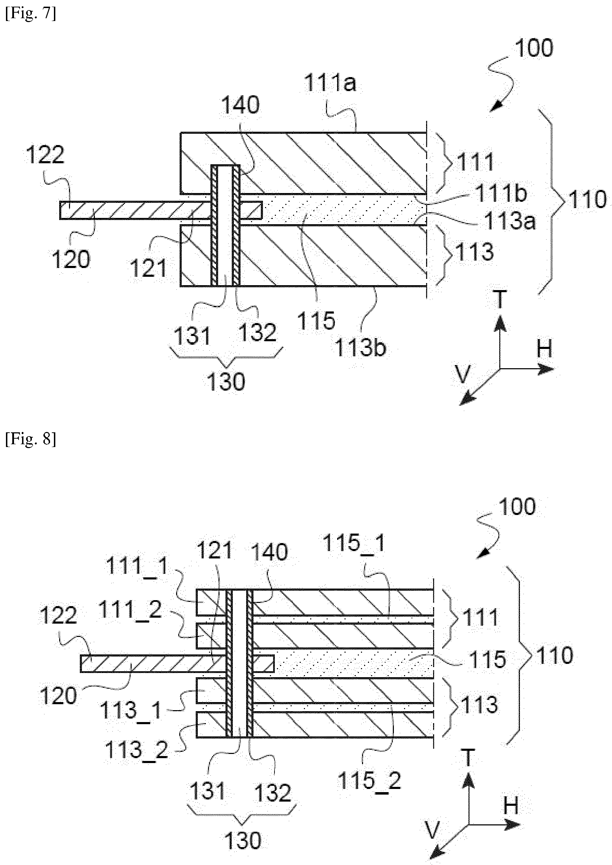

La figure 7 représente schématiquement encore un autre mode de réalisation de l'ensemble vitré 100.

Le mode de réalisation de la figure 7 reprend l'ensemble des caractéristiques du mode de réalisation de la figure 3, à la différence près que la cavité 140 est ici débouchante au travers du seul deuxième pli structural 113 (i.e. au travers de la seule face inférieure 114b).

Rien n'exclut cependant d'envisager encore d'autres modes dans lesquels la cavité 140 est débouchante au travers du seul premier pli structural 111, voire également des modes dans lesquels la cavité 140 est strictement incluse dans le vitrage feuilleté 110 (i.e. la cavité 140 ne débouche au travers d'aucun pli structural 111, 113).

La figure 8 représente schématiquement encore un autre mode de réalisation de l'ensemble vitré 100.

Le mode de réalisation de la figure 8 reprend l'ensemble des caractéristiques du mode de réalisation de la figure 3, à la différence près que l'ensemble de plis structuraux comporte ici quatre plis structuraux 111_1, 111_2, 113_1, 113_2 répartis par paire de part et d'autre de l'élément de retenue 120, une couche adhésive intercalaire 115_1, 115_2 étant agencée entre chaque paire de plis structuraux (ces couches 115_1, 115_2 sont utilisées en plus de la couche 115 permettant le collage entre les plis structuraux 111, 113).

Il est à noter que les plis structuraux ne sont nécessairement tous réalisés dans le même matériau. Ainsi, il peut être envisagé des configurations dans lesquelles les plis les plus externes 111_1, 113_2 vis-à-vis de l'élément de retenu 120 sont réalisés en PMMA étiré, les plis médians 111_2, 113_1 étant quant à eux réalisés en PC qui présente de meilleures performances vis-à-vis des impacts d'oiseaux.

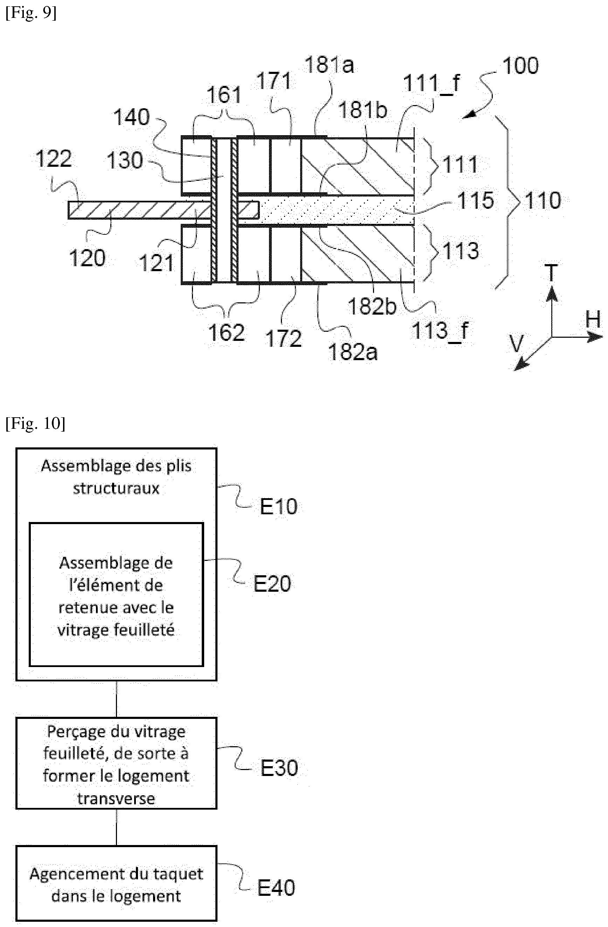

Il a par ailleurs été considéré jusqu'ici que les feuilles de verre des plis structuraux sont réalisées en matériau polymère. Toutefois, l'invention s'applique également dans le cas où lesdites feuilles de verre sont réalisées en verre minéral, par exemple un verre sodocalcique, aluminosilicate, borosilicate, trempé thermiquement, ou renforcé chimiquement, comme cela est illustré dans la figure 9. Il est à noter que dans le mode de réalisation de la figure 9, les plis structuraux 111, 113 ne sont plus limités auxdites feuilles de verre mais comportent encore d'autres éléments. En conséquence, la feuille de verre du premier pli structural 111 (respectivement du deuxième pli structural 113) porte la référence « 111_f » (respectivement la référence 113_f ») pour ce mode de réalisation,

Ainsi, et tel qu'illustré par la figure 9, le premier pli structural 111 comporte :
- un talon 161 réalisé en matériau composite, par exemple renforcé en fibres de verre ou de carbone, et une cale 171 réalisée en matériau souple, préférentiellement en matériau viscoélastique. Le talon 161 et la cale 171 sont agencés sur toute la périphérie de la feuille de verre 111_f au niveau de son chant, ladite cale 171 étant en outre positionnée entre la feuille de verre 111_f et le talon 161,
- des inserts 181a, 181b réalisés en matériau composite, par exemple à base de fibres de verre ou de feuille de titane, agencés de part et d'autre dudit premier pli structural 111 et fixés contre le talon 161, la cale 171 ainsi qu'une partie de la feuille de verre 111_f, par exemple par collage.

Tel qu'illustré par la figure 9, le deuxième pli structural 113 est configurée de manière similaire au premier pli structural 111, et comprend à cet effet un talon 162 et une cale 172, ainsi que des inserts 182a, 182b.

De plus, dans le mode de réalisation de la figure 9, la cavité 140 (et donc a fortiori le taquet 130) s'étend au travers des talons 161, 162 ainsi que des inserts 181a, 181b, 182a, 182b. L'élément de retenue 120, quant à lui, est noyé dans la couche adhésive intercalaire 115.

On note par ailleurs que, dans l'exemple de la figure 9, la cavité 140 est débouchante au travers des premier et deuxième plis structuraux 111, 113 (i.e. au travers de l'insert 181a et/ou au traverse de l'insert 182b). Cela étant, à la manière de ce qui a été exposé ci-avant, il est tout à fait possible d'envisager que la cavité 140 débouche au travers d'un seul desdits plis structuraux 111, 113 ou bien encore est strictement incluse dans le vitrage feuilleté 110.

On note également que le fait d'utiliser des talons 161, 162, des cales 171, 172 et des inserts 181a, 181b, 182a, 182b fait référence à une configuration de l'état de la technique dite « vitrage à collage structural ». Toutefois, à la différence de cette dernière, la configuration de la figure 9 ne fait usage d'aucun élément de retenue externe.

Les inserts 181a, 181b, 182a, 182b ont notamment pour rôle de permettre la transmission des efforts entre les talons 161, 162 et les plis structuraux 111, 113. Les cales 171, 172, quant à elles, permettent de compenser, sur une distance typiquement de l'ordre du centimètre, d'éventuels écarts de forme entre talons 161, 162 et feuilles de verre 112, 114 (lesdits écarts de forme résultant typiquement d'aléas dans la mise en œuvre de procédés de fabrication des talons 161, 162 et des feuilles de verre 111_f, 113_f). Les cales 171, 172 ont aussi pour rôle d'empêcher d'éventuels fluages de résines de composites issues des inserts 181a, 181b, 182a, 182b ou de colle utilisée pour la fixation de ceux-ci.

Les inserts 181a, 181b, 182a, 182b sont distincts des éléments de retenue.

En définitive, il importe de noter que tous les modes de réalisation décrits ci-avant (figures 3 à 9) sont combinables entre eux selon toutes combinaisons techniquement opérables.

Comme mentionné auparavant, l'invention concerne également un procédé de fabrication de l'ensemble vitré 100. Différents modes de mise en œuvre du procédé de fabrication peuvent être envisagés, selon que l'élément de retenue 120 est noyé dans la couche adhésive intercalaire 115 (figure 3 par exemple) ou bien est fixé par collage dans le logement périphérique 150 usiné dans ladite couche adhésive intercalaire 115 (figure 4 par exemple).

La figure 10 représente, sous forme d'ordinogramme, un mode particulier de mise en œuvre du procédé de fabrication de l'ensemble vitré 100 de la figure 3.

Tel qu'illustré par la figure 10, ledit procédé de fabrication comporte des étapes de :
- assemblage E10 entre eux des premier et deuxième plis structuraux 111, 113 par l'intermédiaire de la couche adhésive intercalaire 115, de sorte à former ledit vitrage feuilleté 110,
- assemblage E20 de l'élément de retenue 120 avec ledit vitrage feuilleté 110, de sorte que ladite première partie 121 est insérée de manière fixe dans ladite couche adhésive intercalaire 115 au niveau du chant du vitrage feuilleté 110 ainsi que sur toute sa périphérie, et que ladite partie d'attache 122 prolonge la première partie 121 en dehors du vitrage feuilleté 110,
- perçage E30 du vitrage feuilleté 110 et de l'élément de retenue 120, de sorte à former lesdites cavités 140,
- agencement E40 des taquets 130 dans lesdites cavités 140.

Plus particulièrement, dans le mode de mise en œuvre de la figure 10, l'étape d'assemblage E20 de l'élément de retenue 120 avec le vitrage feuilleté 110 est réalisée pendant la mise en œuvre de l'étape d'assemblage E10 entre eux des premier et deuxième plis structuraux 111, 113, en noyant la première partie 121 de l'élément de retenue 120 dans la couche adhésive intercalaire 115.

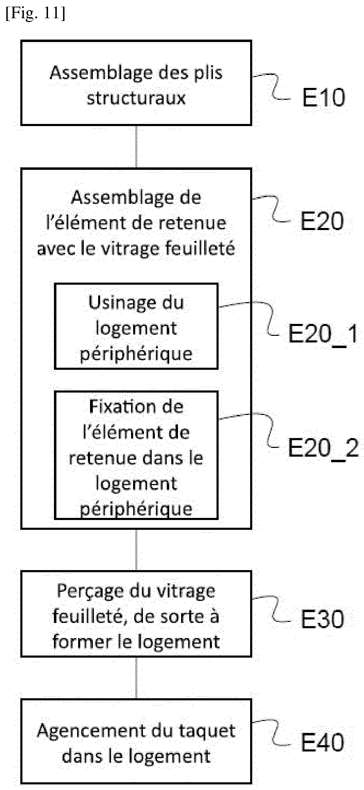

La figure 11 représente, sous forme d'ordinogramme, un mode particulier de mise en œuvre du procédé de fabrication de l'ensemble vitré 100 de la figure 4.

Tel qu'illustré par la figure 11, et à la différence du mode de mise en œuvre décrit en référence à la figure 10, l'étape d'assemblage E20 de l'élément de retenue 120 avec le vitrage feuilleté 110 est réalisée ici une fois l'étape d'assemblage E10 entre eux des premier et deuxième plis structuraux 111, 113 achevée.

En outre, ladite étape E20 comporte, dans ce mode de mise en œuvre :
- un usinage E20_1 du logement périphérique 150 dans la couche adhésive intercalaire 115,
- une fixation E20_2 par collage de la première partie 121 de l'élément de retenue 120 dans ledit logement périphérique 150.

Il est à noter que dans ce mode de mise en œuvre, l'élément de retenue 120 peut avantageusement être réalisé en plusieurs pièces, ces différentes pièces étant fixées dans le logement périphérique 150 usiné.

Il est maintenant décrit la manière dont ledit ensemble vitré 100 est intégré à l'avion en étant fixé (i.e. solidarisé, assujetti) à la structure de celui-ci. Pour des raisons de simplification, cette description est faite uniquement en référence au mode de réalisation de la figure 3. Il apparaitra de manière évidente à l'homme de l'art comment adapter (le cas échéant) cette description pour ce qui concerne les autres modes de réalisation précédemment décrits.

Tel qu'illustré par la figure 3, l'ensemble vitré 100 est agencé de sorte que :
- le premier pli structural 111 est en en continuité aérodynamique avec l'enveloppe de l'avion,
- la partie d'attache 122 de l'élément de retenue 120 est fixée par boulonnage 190 à la structure interne de l'avion.

Plus particulièrement, la partie d'attache 122 est fixée à une partie dite « de support » 200 de la structure interne de l'avion. Ladite partie de support 200 est agencée en regard du chant du vitrage feuilleté 110, et s'étend, dans cet exemple de réalisation, de manière sensiblement parallèle aux plis structuraux 111, 113. Par ailleurs, ladite partie d'attache 122 est agencée entre l'enveloppe externe de l'avion et ladite partie de support 200, le boulonnage 190 étant réalisé de l'extérieur vers l'intérieur de l'avion.

Comme cela peut être observé sur la figure 3, la continuité aérodynamique du vitrage feuilleté 110 avec l'enveloppe de l'avion s'effectue plus spécifiquement au niveau d'un cache 210 de ladite enveloppe. Ledit cache 210 est séparé du vitrage feuilleté 110 par un joint en élastomère 220 et également fixé à la structure interne de l'avion par un boulonnage 230. Deux autres joints en élastomères 240, 250 assurent le contact entre le cache 210 et la structure interne de l'avion.

En variante, la fixation du cache 210 à la structure interne de l'avion peut être réalisée par clipsage ou bien par collage.

En outre, encore deux autres joints en élastomères 260, 270 assurent le contact entre la partie d'attache 122 et la partie de support 200 de la structure interne de l'avion.

Il est à noter que, dans le présent mode de réalisation, la fixation de l'ensemble vitré 100 à la structure de l'avion, telle que décrite en référence à la figure 3, s'effectue plus spécifiquement à partir de l'extérieur dudit avion.

Il importe également de noter que cette fixation ne représente qu'un mode particulier de réalisation de l'invention, et encore d'autres modes peuvent être envisagés.

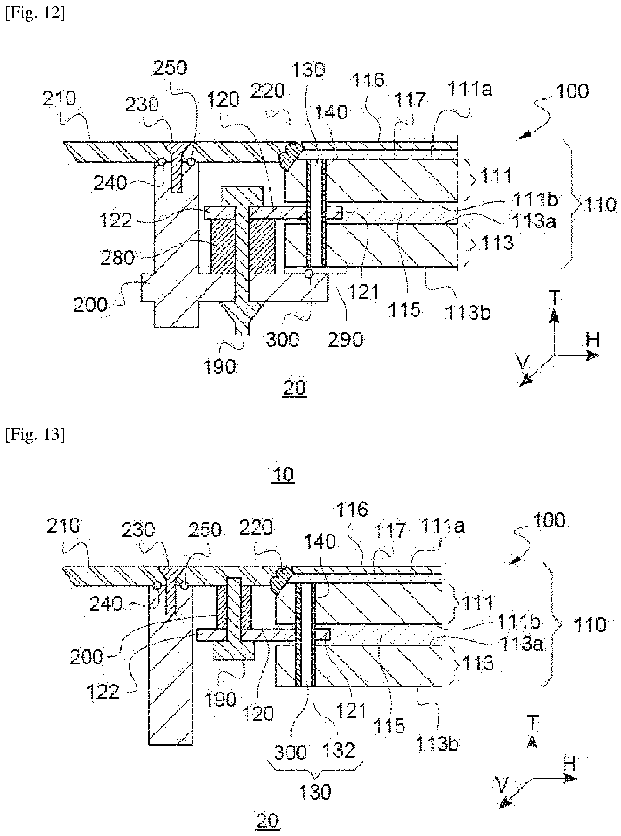

La figure 12 représente schématiquement un autre mode particulier de fixation de l'ensemble vitré 100 de la figure 3 à la structure de l'avion.

Dans l'exemple de la figure 12, ladite partie de support 200 est agencée à distance du deuxième pli structural 113 vers l'intérieur de l'avion, et ladite partie d'attache 122 est agencée entre l'enveloppe externe de l'avion (i.e. le cache 210 ici) et ladite partie de support 200. Le boulonnage 190 est quant à lui réalisé de l'extérieur vers l'intérieur de l'avion au travers d'une cale 280 positionnée entre ladite partie d'attache 122 et la partie de support 200. De plus, un élément de contact 290 réalisé dans un matériau plus ductile que le vitrage 110, comme par exemple en aluminium ou bien en polymère dur (exemple : coton-phénolique ou composite nylon-acrylique), est inséré entre la partie de support 200 et le deuxième pli structural 113. Un joint en élastomère 300 assure le contact entre la partie de support 200 et le deuxième pli structural 113.

De manière similaire à la figure 3, la fixation de l'ensemble vitré 100 à la structure de l'avion, telle que décrite en référence à la figure 12, s'effectue plus spécifiquement à partir de l'extérieur de l'avion.

La figure 13 représente schématiquement encore un autre mode particulier de fixation de l'ensemble vitré 100 de la figure 3 à la structure de l'avion.

Dans l'exemple de la figure 13, ladite partie de support 200 est agencée entre l'enveloppe de l'avion (i.e. le cache 210 ici) et ladite partie d'attache 122. Par ailleurs, le boulonnage 190 est réalisé de l'intérieur vers l'extérieur de l'avion.

Ainsi, à la différence des figures 3 et 11, la fixation de l'ensemble vitré 100 à la structure de l'avion, telle que décrite en référence à la figure 13, s'effectue plus spécifiquement à partir de l'intérieur de l'avion.

L'invention a été décrite jusqu'à présent en considérant que l'ensemble vitré 100 est constitutif du vitrage du cockpit dudit avion. Toutefois, comme déjà précisé, il ne s'agit pas là d'une limitation de l'invention qui peut également s'appliquer au cas d'un vitrage cabine (hublot). Un vitrage cabine est classiquement un double vitrage formé de deux plis structuraux en PMMA. Ces deux plis structuraux sont fixés entre eux par l'intermédiaire d'un joint périphérique, typiquement en silicone, qui permet également de maitriser la distance entre les deux plis structuraux. Dès lors, il résulte de ces dispositions que ledit joint périphérique joue, dans ce cas, le rôle de couche intercalaire au sens de l'invention, dans laquelle est insérée l'élément de retenue 120 via sa première partie 121.

## Revendications

1. Ensemble vitré (100) pour un aéronef, ledit ensemble vitré comportant un vitrage feuilleté (110) comprenant un ensemble de plis structuraux dont un premier pli structural (111) ainsi qu'un deuxième pli structural (113) fixé au premier pli structural par l'intermédiaire d'une couche intercalaire (115), ledit ensemble vitré comportant également :
- un élément de retenue (120) dont une première partie (121) est insérée de manière fixe dans au moins ladite couche intercalaire au niveau du chant du vitrage feuilleté ainsi que sur au moins une portion de sa périphérie, préférentiellement sur toute la périphérie du vitrage feuilleté, et dont une deuxième partie (122) prolonge la première partie en dehors du vitrage feuilleté,
- une pluralité de taquets (130) agencés dans des cavités (140) respectives réalisées dans le vitrage feuilleté de sorte que lesdits taquets s'étendent de manière sensiblement perpendiculaire au travers de la première partie de l'élément de retenue ainsi que dans chacun desdits plis structuraux.

2. Ensemble vitré (100) selon la revendication 1, dans lequel au moins un taquet (130) comporte un corps (131) réalisé en matériau métallique, par exemple en titane ou en acier, au moins un taquet (130) comportant de préférence un manchon périphérique (132) audit corps (131) réalisé en matériau élastique, par exemple en élastomère.

3. Ensemble vitré (100) selon la revendication 1 ou 2, dans lequel au moins un taquet (130) est agencé dans la cavité (140) qui lui est associée avec un jeu.

4. Ensemble vitré (100) selon l'une quelconque des revendications 1 à 3, dans lequel ledit ensemble de plis structuraux comporte au moins trois plis structuraux, par exemple quatre plis structuraux (111_1, 111_2, 113_1, 113_2), préférentiellement quatre plis structuraux répartis par paire de part et d'autre de l'élément de retenue, une couche intercalaire (115_1, 115_2) étant agencée entre chaque paire de plis structuraux.

5. Ensemble vitré (100) selon l'une quelconque des revendications 1 à 4, dans lequel au moins une cavité (140) accueillant un taquet (130) est strictement incluse dans le vitrage feuilleté (110), ou bien débouchante au travers d'un seul pli structural (111, 113), ou bien débouchante au travers de tous les plis structuraux.

6. Ensemble vitré (100) selon la revendication précédente 5, dans lequel, lorsque ladite au moins une cavité (140) est débouchante au travers de tous les plis structuraux (111, 113), le corps (131) du taquet (130) agencé dans ladite au moins une cavité est creux.

7. Ensemble vitré (100) selon l'une quelconque des revendications 1 à 6, dans lequel chaque couche intercalaire (115) est une couche adhésive réalisée en polyuréthane thermoplastique, polyvinylbutyral, copolymère éthylène - acétate de vinyle, résine ionomère, ou en résine de coulée.

8. Ensemble vitré (100) selon l'une quelconque des revendications 1 à 7, dans lequel la première partie (121) de l'élément de retenue (120) est noyée dans la couche intercalaire (115) par l'intermédiaire de laquelle le premier pli structural (111) est collé au deuxième pli structural (113).

9. Ensemble vitré (100) selon l'une quelconque des revendications 1 à 7, dans lequel la première partie (121) de l'élément de retenue (120) est fixée par collage dans un logement périphérique (150) usiné dans ladite couche intercalaire (115), voire également dans au moins un desdits premier et deuxième plis structuraux (111, 113), par exemple de manière symétrique dans lesdits premier et deuxième plis structuraux.

10. Ensemble vitré (100) selon l'une quelconque des revendications 1 à 9, dans lequel les feuilles de verre des plis structuraux (111, 113) sont réalisées en matériau polymère, les cavités (140) étant agencées dans lesdites feuilles de verre.

11. Ensemble vitré (100) selon l'une quelconque des revendications 1 à 9, dans lequel les feuilles de verre des plis structuraux (111, 113) sont réalisées en verre minéral, chaque pli structural comportant :
- un talon (161, 162) réalisé en matériau composite et une cale (171, 172) réalisée en matériau souple, le talon et la cale étant agencés sur toute la périphérie de la feuille de verre au niveau de son chant, ladite cale étant en outre positionnée entre la feuille de verre et le talon,
- des inserts (181a, 181b, 182a, 182b) réalisés en matériau composite, agencés de part et d'autre du pli structural et fixés contre le talon, la cale ainsi qu'une partie de la feuille de verre,
et dans lequel les cavités (140) s'étendent au travers des talons ainsi que des inserts, l'élément de retenue (120) étant noyé dans la couche intercalaire (115) par l'intermédiaire de laquelle le premier pli structural est fixé au deuxième pli structural.

12. Ensemble vitré (100) selon l'une quelconque des revendications 1 à 11, dans lequel l'élément de retenue (120) est configuré pour fixer le vitrage feuilleté (110) à l'aéronef, notamment à une structure interne de l'aéronef.

13. Ensemble vitré selon l'une quelconque des revendications 1 à 12, dans lequel la deuxième partie (122) de l'élément de retenue (120) prolongeant la première partie (121) en dehors du vitrage feuilleté (110) est configurée pour être fixée à une structure interne de l'aéronef.

14. Procédé de fabrication d'un ensemble vitré (100) selon l'une quelconque des revendications 1 à 13, ledit procédé comportant des étapes de :
- assemblage (E10) entre eux des plis structuraux (111, 113), de sorte à former ledit vitrage feuilleté (110),
- assemblage (E20) de l'élément de retenue (120) avec ledit vitrage feuilleté, de sorte que ladite première partie (121) est insérée de manière fixe dans au moins ladite couche intercalaire par l'intermédiaire de laquelle le premier pli structural est fixé au deuxième pli structural au niveau du chant du vitrage feuilleté ainsi que sur au moins une portion de sa périphérie, préférentiellement sur toute la périphérie du vitrage feuilleté, et de sorte que ladite deuxième partie (122) prolonge la première partie en dehors du vitrage feuilleté,
- perçage (E30) du vitrage feuilleté et de l'élément de retenue, de sorte à former lesdites cavités (140),
- agencement (E40) desdits taquets (130) dans lesdites cavités.

15. Procédé selon la revendication 14, dans lequel l'étape d'assemblage (E20) de l'élément de retenue (120) avec le vitrage feuilleté (110) est réalisée pendant la mise en œuvre de l'étape d'assemblage (E10) entre eux des premier et deuxième plis structuraux (111, 113), en noyant la première partie (121) de l'élément de retenue dans la couche intercalaire (115) par l'intermédiaire de laquelle le premier pli structural est fixé au deuxième pli structural.

16. Procédé selon la revendication 14, dans lequel l'étape d'assemblage (E20) de l'élément de retenue (120) avec le vitrage feuilleté (110) est réalisée une fois l'étape d'assemblage (E10) entre eux des premier et deuxième plis structuraux (111, 113) achevée, et comprend :
- un usinage (E20_1) d'un logement périphérique (150) dans ladite couche intercalaire, voire également dans au moins un desdits premier et deuxième plis structuraux, par exemple de manière symétrique dans lesdits premier et deuxième plis structuraux,
- une fixation (E20_2) par collage de la première partie (121) de l'élément de retenue dans ledit logement périphérique.

17. Aéronef comportant un ensemble vitré (100) selon l'une quelconque des revendications 1 à 13 agencé en continuité aérodynamique avec l'enveloppe (210) dudit aéronef, la deuxième partie (122) de l'élément de retenue (120), dite « partie d'attache », étant fixée à la structure interne de l'aéronef.

18. Aéronef selon la revendication 17, dans lequel la partie d'attache (122) est fixée à une partie dite « de support » (200) de la structure interne de l'aéronef, ladite partie de support (200) étant agencée en regard du chant du vitrage feuilleté (110), ladite partie d'attache étant agencée entre l'enveloppe (210) de l'aéronef et ladite partie de support.

19. Aéronef selon la revendication 17, dans lequel la partie d'attache (122) est fixée à une partie dite « de support » (200) de la structure interne de l'aéronef, ladite partie de support étant agencée à distance du deuxième pli structural (113) vers l'intérieur de l'aéronef, ladite partie d'attache étant agencée entre l'enveloppe (210) de l'aéronef et ladite partie de support (200), la fixation de la partie d'attache (122) étant réalisée au moyen d'une cale (280) positionnée entre ladite partie d'attache (122) et la partie de support (200), un élément de contact (290) réalisé dans un matériau plus ductile que le vitrage étant en outre inséré entre la partie de support et le deuxième pli structural.

20. Aéronef selon la revendication 17, dans lequel la partie d'attache (122) est fixée à une partie dite « de support » (200) de la structure interne de l'aéronef, ladite partie de support (200) étant agencée entre l'enveloppe (210) de l'aéronef et ladite partie d'attache.

## Patentansprüche

1. Verglaste Einheit (100) für ein Luftfahrzeug, wobei die verglaste Einheit eine Verbundverglasung (110), umfassend eine Einheit von Strukturlagen, darunter eine erste Strukturlage (111) sowie eine zweite Strukturlage (113), die an der ersten Strukturlage mittels einer Zwischenschicht (115) befestigt ist, vorweist, wobei die verglaste Einheit ebenfalls vorweist:
- ein Rückhalteelement (120), wobei ein erster Teil (121) in mindestens der Zwischenschicht auf Höhe der Kante der Verbundverglasung sowie auf mindestens einem Abschnitt ihres Umfangs, vorzugsweise auf dem gesamten Umfang der Verbundverglasung, auf feste Weise eingefügt ist, und wobei ein zweiter Teil (122) den ersten Teil außerhalb der Verbundverglasung verlängert,
- eine Vielzahl von Sperrklötzen (130), die in jeweiligen Hohlräumen (140) angeordnet sind, die in der Verbundverglasung gefertigt sind, sodass sich die Sperrklötze im Wesentlichen senkrecht durch den ersten Teil des Rückhalteelements sowie in jede der Strukturlagen erstrecken.

2. Verglaste Einheit (100) nach Anspruch 1, wobei mindestens ein Sperrklotz (130) einen Körper (131) vorweist, der aus metallischem Material gefertigt ist, zum Beispiel aus Titan oder aus Stahl, wobei mindestens ein Sperrklotz (130) vorzugsweise eine Umfangshülse (132) an dem Körper (131) vorweist, die aus elastischem Material gefertigt ist, zum Beispiel aus Elastomer.

3. Verglaste Einheit (100) nach Anspruch 1 oder 2, wobei mindestens ein Sperrklotz (130) in dem Hohlraum (140), der ihm zugeordnet ist, mit einem Spiel angeordnet ist.

4. Verglaste Einheit (100) nach einem der Ansprüche 1 bis 3, wobei die Einheit von Strukturlagen mindestens drei Strukturlagen vorweist, zum Beispiel vier Strukturlagen (111_1, 111_2, 113_1, 113_2), vorzugsweise vier Strukturlagen, die paarweise auf beiden Seiten des Rückhalteelements verteilt sind, wobei eine Zwischenschicht (115_1, 115_2) zwischen jedem Paar von Strukturlagen angeordnet ist.

5. Verglaste Einheit (100) nach einem der Ansprüche 1 bis 4, wobei mindestens ein Hohlraum (140), der einen Sperrklotz (130) aufnimmt, in der Verbundverglasung (110) strikt eingeschlossen ist, oder durch eine einzige Strukturlage (111, 113) hindurch mündet, oder durch alle Strukturlagen hindurch mündet.

6. Verglaste Einheit (100) nach dem vorstehenden Anspruch 5, wobei, wenn der mindestens eine Hohlraum (140) durch alle Strukturlagen (111, 113) hindurch mündet, der Körper (131) des Sperrklotzes (130), der in dem mindestens einen Hohlraum angeordnet ist, hohl ist.

7. Verglaste Einheit (100) nach einem der Ansprüche 1 bis 6, wobei jede Zwischenschicht (115) eine Haftmittelschicht ist, die aus thermoplastischem Polyurethan, Polyvinylbutyral, Ethylen-Vinylacetat-Copolymer, Ionomerharz oder Gießharz gefertigt ist.

8. Verglaste Einheit (100) nach einem der Ansprüche 1 bis 7, wobei der erste Teil (121) des Rückhalteelements (120) in die Zwischenschicht (115) eingebettet ist, mittels derer die erste Strukturlage (111) mit der zweiten Strukturlage (113) verklebt ist.

9. Verglaste Einheit (100) nach einem der Ansprüche 1 bis 7, wobei der erste Teil (121) des Rückhalteelements (120) durch Kleben in einer peripheren Aufnahme (150) befestigt ist, die in der Zwischenschicht (115), sogar ebenfalls in mindestens einer der ersten und der zweiten Strukturlage (111, 113), zum Beispiel auf symmetrische Weise in der ersten und der zweiten Strukturlage hergestellt ist.

10. Verglaste Einheit (100) nach einem der Ansprüche 1 bis 9, wobei die Glasscheiben der Strukturlagen (111, 113) aus Polymermaterial gefertigt sind, wobei die Hohlräume (140) in den Glasscheiben angeordnet sind.

11. Verglaste Einheit (100) nach einem der Ansprüche 1 bis 9, wobei die Glasscheiben der Strukturlagen (111, 113) aus Mineralglas gefertigt sind, wobei jede Strukturlage vorweist:
- einen Absatz (161, 162), der aus Verbundmaterial gefertigt ist, und eine Unterlage (171, 172), die aus weichem Material gefertigt ist, wobei der Absatz und die Unterlage über den gesamten Umfang der Glasscheibe auf Höhe ihrer Kante angeordnet sind, wobei die Unterlage ferner zwischen der Glasscheibe und dem Absatz positioniert ist,
- Einsätze (181a, 181b, 182a, 182b) aus Verbundmaterial, die auf beiden Seiten der Strukturlage angeordnet und an dem Absatz, der Unterlage sowie einem Teil der Glasscheibe befestigt sind,
und wobei sich die Hohlräume (140) durch die Absätze sowie durch die Einsätze erstrecken, wobei das Rückhalteelement (120) in der Zwischenschicht (115) eingebettet ist, mittels derer die erste Strukturlage an der zweiten Strukturlage befestigt ist.

12. Verglaste Einheit (100) nach einem der Ansprüche 1 bis 11, wobei das Rückhalteelement (120) zum Befestigen der Verbundverglasung (110) an dem Luftfahrzeug, insbesondere an einer internen Struktur des Luftfahrzeugs, konfiguriert ist.

13. Verglaste Einheit nach einem der Ansprüche 1 bis 12, wobei der zweite Teil (122) des Rückhalteelements (120), der den ersten Teil (121) außerhalb der Verbundverglasung (110) verlängert, konfiguriert ist, um an einer internen Struktur des Luftfahrzeugs befestigt zu werden.

14. Verfahren zum Produzieren einer verglasten Einheit (100) nach einem der Ansprüche 1 bis 13, wobei das Verfahren die Schritte vorweist:
- Zusammenbauen (E10) der Strukturlagen (111, 113) miteinander, um die Verbundverglasung (110) auszubilden,
- Zusammenbauen (E20) des Rückhalteelements (120) mit der Verbundverglasung, sodass der erste Teil (121) in mindestens der Zwischenschicht auf feste Weise eingefügt ist, mittels derer die erste Strukturlage mit der zweiten Strukturlage auf Höhe der Kante der Verbundverglasung sowie auf mindestens einem Abschnitt ihres Umfangs, vorzugsweise auf dem gesamten Umfang der Verbundverglasung, befestigt ist, und sodass der zweite Teil (122) den ersten Teil außerhalb der Verbundverglasung verlängert,
- Bohren (E30) der Verbundverglasung und des Rückhalteelements, sodass die Hohlräume (140) ausgebildet werden,
- Anordnen (E40) der Sperrklötze (130) in den Hohlräumen.

15. Verfahren nach Anspruch 14, wobei der Schritt des Zusammenbauens (E20) des Rückhalteelements (120) mit der Verbundverglasung (110) während die Durchführung des Schritts des miteinander Zusammenbauens (E10) der ersten und der zweiten Strukturlage (111,113) umgesetzt wird, indem der erste Teil (121) des Rückhalteelements in der Zwischenschicht (115) eingebettet wird, mittels derer die erste Strukturlage an der zweiten Strukturlage befestigt wird.

16. Verfahren nach Anspruch 14, wobei der Schritt des Zusammenbauens (E20) des Rückhalteelements (120) mit der Verbundverglasung (110) umgesetzt wird, nachdem der Schritt des miteinander Zusammenbauens (E10) zwischen der ersten und der zweiten Strukturlage (111, 113) abgeschlossen ist, und umfasst:
- ein Herstellen (E20_1) einer peripheren Aufnahme (150) in der Zwischenschicht, sogar ebenfalls in mindestens einer der ersten und der zweiten Strukturlage, zum Beispiel auf symmetrische Weise in der ersten und der zweiten Strukturlage,
- ein Befestigen (E20_2) durch Kleben des ersten Teils (121) des Rückhalteelements in der peripheren Aufnahme.

17. Luftfahrzeug, das eine verglaste Einheit (100) nach einem der Ansprüche 1 bis 13 vorweist, die in aerodynamischer Kontinuität mit der Hülle (210) des Luftfahrzeugs angeordnet ist, wobei der zweite Teil (122) des Rückhalteelements (120), der sogenannte "Anbringungsteil", an der internen Struktur des Luftfahrzeugs befestigt ist.

18. Luftfahrzeug nach Anspruch 17, wobei der Anbringungsteil (122) an einem sogenannten "Stützteil" (200) der internen Struktur des Luftfahrzeugs befestigt ist, wobei der Stützteil (200) gegenüber der Kante der Verbundverglasung (110) angeordnet ist, wobei der Anbringungsteil zwischen der Hülle (210) des Luftfahrzeugs und dem Stützteil angeordnet ist.

19. Luftfahrzeug nach Anspruch 17, wobei der Befestigungsteil (122) an einem sogenannten "Stützteil" (200) der internen Struktur des Luftfahrzeugs befestigt ist, wobei der Stützteil in einem Abstand von der zweiten Strukturlage (113) zum Inneren des Luftfahrzeugs hin angeordnet ist, wobei der Anbringungsteil zwischen der Hülle (210) des Luftfahrzeugs und dem Stützteil (200) angeordnet ist, wobei die Befestigung des Anbringungsteils (122) mittels einer Unterlage (280) erfolgt, die zwischen dem Anbringungsteil (122) und dem Stützteil (200) positioniert ist, wobei ein Kontaktelement (290), das aus einem duktileren Material als die Verglasung gefertigt ist, ferner zwischen dem Stützteil und der zweiten Strukturfalte eingefügt ist.

20. Luftfahrzeug nach Anspruch 17, wobei der Anbringungsteil (122) an einem sogenannten "Stützteil" (200) der internen Struktur des Luftfahrzeugs befestigt ist, wobei der Stützteil (200) zwischen der Hülle (210) des Luftfahrzeugs und dem Anbringungsteil angeordnet ist.

## Claims

1. A glazed assembly (100) for an aircraft, said glazed assembly comprising a laminated glazing (110) comprising a set of structural plies including a first structural ply (111) and a second structural ply (113) fixed to the first structural ply by means of an interlayer (115), said glazed assembly also comprising:
- a retaining element (120), a first portion of which (121) is fixedly inserted in at least said interlayer at the edge of the laminated glazing and over at least a portion of its periphery, preferentially over the entire periphery of the laminated glazing, and a second portion of which (122) extends the first portion outside of the laminated glazing,
- a plurality of cleats (130) arranged in respective cavities (140) formed in the laminated glazing so that said cleats extend substantially perpendicularly across the first portion of the retaining element and into each of said structural plies.

2. The glazed assembly (100) according to claim 1, wherein at least one cleat (130) comprises a body (131) made of a metallic material, for example titanium or steel, at least one cleat (130) comprising preferably a sleeve (132) peripheral to said body (131) and made of an elastic material, for example elastomer.

3. The glazed assembly (100) according to claim 1 or 2, wherein at least one cleat (130) is arranged in its associated cavity (140) with clearance.

4. The glazed assembly (100) according to any one of claims 1 to 3, wherein said set of structural plies comprises at least three structural plies, for example four structural plies (111_1, 111_2, 113_1, 113_2), preferentially four structural plies distributed in pairs on either side of the retaining element, an interlayer (115_1, 115_2) being arranged between each pair of structural plies.

5. The glazed assembly (100) according to any one of claims 1 to 4, wherein at least one cavity (140) accommodating a cleat (130) is strictly included in the laminated glazing (110), either opening through a single structural ply (111, 113), or opening through all the structural plies.

6. The glazed assembly (100) according to claim 5, wherein, when said at least one cavity (140) is open through all the structural plies (111, 113), the body (131) of the cleat (130) arranged in said at least one cavity is hollow.

7. The glazed assembly (100) according to any one of claims 1 to 6, wherein each interlayer (115) is an adhesive layer made of thermoplastic polyurethane, polyvinyl butyral, ethylene-vinyl acetate copolymer, ionomer resin, or casting resin.

8. The glazed assembly (100) according to any one of claims 1 to 7, wherein the first portion (121) of the retaining element (120) is embedded in the interlayer (115) via which the first structural ply (111) is bonded to the second structural ply (113).

9. The glazed assembly (100) according to any one of claims 1 to 7, wherein the first portion (121) of the retaining element (120) is fixed by gluing in a peripheral recess (150) machined in said interlayer (115), or even in at least one of said first and second structural plies (111, 113), for example symmetrically in said first and second structural plies.

10. The glazed assembly (100) according to any one of claims 1 to 9, wherein the glass sheets of the structural plies (111, 113) are made of polymeric material, the cavities (140) being arranged in said glass sheets.

11. The glazed assembly (100) according to any one of claims 1 to 9, wherein the glass sheets of the structural plies (111, 113) are made of mineral glass, each structural ply comprising:
- a heel (161, 162) made of composite material and a shim (171, 172) made of flexible material, the heel and shim being arranged around the entire periphery of the glass sheet at its edge, said shim also being positioned between the glass sheet and the heel,
- inserts (181a, 181b, 182a, 182b) made of composite material, arranged on either side of the structural ply and fixed against the heel, the shim and part of the glass sheet,
and wherein the cavities (140) extend through the heels as well as the inserts, the retaining element (120) being embedded in the interlayer (115) via which the first structural ply is bonded to the second structural ply.

12. The glazed assembly (100) according to any one of claims 1 to 11, wherein the retaining element (120) is configured to secure the laminated glazing unit (110) to the aircraft, in particular to an internal structure of the aircraft.

13. The glazed assembly according to any one of claims 1 to 12, wherein the second portion (122) of the retaining element (120) extending the first portion (121) outside the laminated glazing (110) is configured for attachment to an internal structure of the aircraft.

14. A method for manufacturing a glazing unit (100) according to any one of claims 1 to 13, said method comprising the steps of:
- assembling (E10) the structural plies (111, 113) to each other to form said laminated glazing (110),
- assembling (E20) the retaining element (120) with said laminated glazing, so that said first portion (121) is fixedly inserted in at least said interlayer by means of which the first structural ply is fixed to the second structural ply, at the edge of the laminated glazing as well as over at least a portion of its periphery, preferentially over the entire periphery of the laminated glazing, so that said second portion (122) extends the first portion outside the laminated glazing,
- drilling (E30) the laminated glazing and the retaining element to form said cavities (140),
- arranging (E40) said cleats (130) in said cavities.

15. The method according to claim 14, wherein the step (E20) of assembling the retaining element (120) to the laminated glazing (110) is carried out during the step (E10) of assembling the first and second structural plies (111, 113) to each other, by embedding the first portion (121) of the retaining element in the interlayer (115) via which the first structural ply is attached to the second structural ply.

16. The method according to claim 14, wherein the step of assembling (E20) the retaining element (120) with the laminated glazing (110) is carried out once the step of assembling (E10) the first and second structural plies (111, 113) to each other has been completed, and comprises:
- machining (E20_1) a peripheral recess (150) in said interlayer, or even in at least one of said first and second structural plies, for example symmetrically in said first and second structural plies,
- bonding (E20_2) the first portion (121) of the retaining element into said peripheral recess.

17. An aircraft comprising a glazed assembly (100) according to any one of claims 1 to 13 arranged in aerodynamic continuity with the envelope (210) of said aircraft, the second portion (122) of the retaining element (120), known as the "attachment part", being fixed to the internal structure of the aircraft.

18. The aircraft according to claim 17, wherein the attachment part (122) is fixed to a so-called "support" part (200) of the internal structure of the aircraft, said support part (200) being arranged facing the edge of the laminated glazing (110), said attachment part being arranged between the envelope (210) of the aircraft and said support part.

19. The aircraft according to claim 17, wherein the attachment part (122) is fastened to a so-called "support" part (200) of the internal structure of the aircraft, said support part being arranged at a distance from the second structural ply (113) towards the interior of the aircraft, said attachment part being arranged between the aircraft envelope (210) and said support part (200), the attachment part (122) being secured by means of a shim (280) positioned between said attachment part (122) and the support part (200), a contact element (290) made of a material more ductile than glazing also being inserted between the support part and the second structural ply.

20. The aircraft according to claim 17, wherein the attachment part (122) is fixed to a so-called "support part" (200) of the internal structure of the aircraft, said support part (200) being arranged between the envelope (210) of the aircraft and said attachment part.
